# EUROPÄISCHE PATENTANMELDUNG

(11) **EP 3 121 059 A1**
(43) Veröffentlichungstag der Anmeldung: **25.01.2017**
(21) Anmeldenummer: 16001221.7
(22) Anmeldetag: 31.05.2016
(51) Int. Cl.: B60N 2/06, B60N 2/07, B60N 2/24, B60N 2/38

(54) **STRASSENBAUMASCHINE UND SITZKONSOLE FÜR EINE STRASSENBAUMASCHINE**

(30) Priorität: 22.07.2015 DE 102015009304
(71) Anmelder: Dynapac GmbH, 26203 Wardenburg (DE)
(72) Erfinder: Anup, Jacob, 26203 Wardenburg (DE)
(74) Vertreter: Möller, Friedrich

(57) **Zusammenfassung**

Bei Straßenbaumaschinen der hier angesprochenen Art kann es sich um Straßenfertiger (10), Beschicker für Straßenfertiger oder auch um Straßenfräsen handeln. Damit eine Bedienperson von einem Führerstand (20) der Straßenbaumaschinen aus den Herstellungsprozess besser einsehen kann, ist eine Sitzkonsole (24) quer zu einer Bewegungsrichtung (13) der Straßenbaumaschine beweglich gelagert. Dazu verfügt die Sitzkonsole (24) über ein lineares Führungssystem. Bei diesen üblicherweise offenen Sitzkonsolen (24), sind insbesondere die mechanischen Komponenten, wie Stangen (32) und/oder Lager (34), besonders anfällig für Verschmutzung und bergen darüberhinaus eine Verletzungsgefahr in sich. Die Anmeldung schafft eine Straßenbaumaschine sowie eine Sitzkonsole (24) für eine Straßenbaumaschine, bei der die Sitzkonsole (24) sicher und zuverlässig verschiebbar ist. Dafür weist die mindestens eine Sitzkonsole (24) an einer Unterseite (31) eine Stange (32) auf, die in mindestens einem an einem Chassis (19) befestigten Lager (34) quer zur Bewegungsrichtung (13) linear verschiebbar ist.

## Beschreibung

Die Erfindung betrifft eine Straßenbaumaschine gemäß dem Oberbegriff des Anspruchs 1. Des Weiteren betrifft die Erfindung eine Sitzkonsole für eine Straßenbaumaschine gemäß dem Anspruch 10.

Bei Straßenbaumaschinen der hier angesprochenen Art kann es sich um Straßenfertiger, Beschicker für Straßenfertiger oder auch um Straßenfräsen handeln. Diese sind üblicherweise selbstfahrend ausgebildet und verfügen über mindestens einen Verbrennungsmotor zum Antrieb eines Fahrwerks und weiteren Leistungsabnehmern. Bei dem Fahrwerk handelt es sich üblicherweise um ein Raupenfahrwerk oder ein Radfahrwerk. Insbesondere Straßenfertiger weisen in Einbaurichtung gesehen am vorderen Ende des Straßenfertigers mindestens einen Vorratsbehälter zur Aufnahme des Straßenbaumaterials, insbesondere des heißen bituminösen Asphaltmaterials auf. Das Asphaltmaterial wird dann vom Vorratsbehälter mittels eines Förderers unter einer Plattform bzw. unter einem Fahrzeuggestell oder Chassis mit einem Führerstand zu einer hinteren Verteilerschnecke transportiert, die das noch heiße bituminöse Straßenbaumaterial über die Arbeitsbreite des Straßenfertigers vor mindestens einer hinteren Einbaubohle verteilt.

Zum Steuern der Straßenbaumaschine, insbesondere des Straßenfertigers oder des Beschickers, befindet sich in dem Führerstand eine Bedienperson, die über Steuerelemente bzw. einen Bedienpult die Straßenbaumaschine steuert. Der Führerstand weist mindestens eine einen Bedienersitz aufweisende Sitzkonsole auf. Damit die Bedienperson, von dem Führerstand aus den Herstellungsprozess besser einsehen kann, ist es bekannt, dass die Sitzkonsolen quer zu einer Bewegungsrichtung der Straßenbaumaschine beweglich gelagert sind. Aus dem Stand der Technik ist es bekannt, dass dazu die Sitzkonsole über ein lineares Führungssystem verfügt. Über dieses Führungssystem ist die Sitzkonsole beispielsweise über eine Stange linear verschiebbar. Dadurch lässt sich die Sitzkonsole über das Chassis hinaus in den Herstellungsbereich hinein verschieben.

Da diese bekannten Systeme zur Linearverschiebung der Sitzkonsole üblicherweise offen liegen, dass heißt frei zugänglich sind, sind insbesondere die mechanischen Komponenten, wie Stangen oder Lager, besonders anfällig für Verschmutzungen. Durch Verschmutzungen wie beispielsweise Staub oder hochspritzendes Straßenbaumaterial kann die Bewegung der Sitzkonsolen relativ zum Chassis derart beeinträchtigt werden, dass sie sich nur noch schwer oder gar nicht bewegen lassen.

Darüber hinaus birgt ein offenes, d.h. frei zugängliches Führungssystem die Gefahr, dass die Bedienperson mit einem Körperteil in die vorzugsweise händisch zu bewegende Sitzkonsole gerät und Quetschungen davon trägt. Darüber hinaus können sonstige Gegenstände, wie beispielsweise Werkzeuge, die in das Führungssystem fallen, den Bewegungsablauf der Konsole stören.

Der Erfindung liegt daher die Aufgabe zu Grunde, eine Straßenbaumaschine sowie eine Sitzkonsole für eine Straßenbaumaschine zu schaffen, so dass die Sitzkonsole sicher und zuverlässig verschiebbar ist.

Eine Straßenbaumaschine zur Lösung dieser Aufgabe weist die Merkmale des Anspruchs 1 auf. Demnach ist es erfindungsgemäß vorgesehen, dass die mindestens eine Sitzkonsole an einer Unterseite eine Stange aufweist, die in mindestens einem am Chassis befestigten Lager quer zur Bewegungsrichtung linear verschiebbar ist. Dabei ist die Stange der Unterseite der Sitzkonsole fest zugeordnet. Üblicherweise weist der Führerstand einer Straßenbaumaschine zwei Sitzkonsolen auf, die jeweils über Bedienelemente bzw. über jeweils ein Bedienpult verfügen und an zwei gegenüberliegenden Längsseiten der Straßenbaumaschine ausgerichtet sind. Die Bedienperson kann die Straßenbaumaschine von einer linken oder einer rechten Sitzkonsole aus steuern und währenddessen den entsprechenden Bereich des Herstellungsprozesses beobachten. Dadurch, dass die Sitzkonsole über die Stange verschiebbar ist, kann sich die Bedienperson sitzend weiter in den zu beobachtenden Bereich hineinbewegen.

Insbesondere kann es die vorliegende Erfindung weiter vorsehen, dass die Stange von der Sitzkonsole verdeckt unter selbiger fest angeordnet ist, insbesondere das die Stange an einem in Bewegungsrichtung gesehen hinterem Teil der Sitzkonsole, vorzugsweise unter dem Bedienersitz befestigt ist. Dadurch, dass die Stange durch die Sitzkonsole verdeckt ist, ist sie geschützt vor jeglichem Schmutz, der von dem Führerstand aus auf die Stange fällt. Des Weiteren bewirkt eine derartige Abdeckung der Stange, dass die Bedienperson nicht ungewollt mit einem Körperteil zwischen die Stange und ein Lager gerät. Des Weiteren kann ebenso ausgeschlossen werden, dass andere Gegenstände, wie beispielsweise Werkzeug, den Verschiebemechanismus der Sitzkonsole stört. Dadurch, dass die Stange an Lagern verschiebbar ist, sind auch die Lager durch die Sitzkonsole verdeckt und somit geschützt. Auf diese Art und Weise wird ein wartungsarmer Betrieb der Sitzkonsole gewährleistet.

Bevorzugt ist es des Weiteren vorgesehen, dass das mindestens eine Lager als Linearlager, insbesondere Linearkugellager oder Kugelbuchse ausgebildet ist. Durch derartige Linearlager kann die Stange besonders leicht und ohne große Kraftaufwendung entlang einer Längsachse der Stange bewegt werden. Darüberhinaus ist es auch denkbar, dass andere Lagerarten für den Verschiebemechanismus der Sitzkonsole verwendet werden.

Eine weitere besonders bevorzugte Ausgestaltung der vorliegenden Erfindung kann es vorsehen, dass die Stange mit ihren beiden Enden durch zwei Befestigungsmittel an der Unterseite der Sitzkonsole befestigt ist. Durch diese Befestigungsmittel kann die Stange auf einfache sowie sichere Art und Weise mit der Sitzkonsole in Verbindung gebracht werden. Dabei sieht es die Erfindung außerdem vor, dass die beiden Befestigungsmittel an den äußersten Enden der Stange angebracht werden, um den Weg, um den die Sitzkonsole auf den Lagern verschiebbar ist, zu maximieren.

Des Weiteren kann es die vorliegende Erfindung außerdem vorsehen, dass die Stange in zwei Linearkugellagern, die beide am Chassis befestigt sind, beweglich gelagert ist, wobei der Abstand der beiden Linearkugellager ein Bruchteil der Länge der Stange entspricht, insbesondere gleich bzw. kleiner als die Hälfte der Länge der Stange ist. Dabei sind die Linearkugellager genau derart beabstandet, dass die Stange im ausreichenden Maße von den Linearkugellagern gehalten bzw. führbar ist. Durch Verringerung des Abstandes der Linearkugellager auf dem Chassis kann eine Verschiebeweite oder Reichweite der Sitzkonsole relativ zu dem Chassis, maximiert werden. Allerdings darf der Abstand nicht zu gering werden, da sonst die Befestigung der Sitzkonsole bzw. der Stange auf dem Chassis zu instabil wird.

Darüber hinaus kann es erfindungsgemäß vorgesehen sein, dass die Stange um das mindestens eine Lager der Sitzkonsole durch eine schließbare, vorzugsweise abschließbare, an der Sitzkonsole angebaute, Bodenplatte zugänglich ist. Damit diese Bodenplatte nicht ungewollt geöffnet wird oder sich selbstständig öffnet, kann es vorgesehen sein, dass die Platte ein Schließinstrument, wie beispielsweise ein Schloss aufweist. Insbesondere für Wartungszwecke kann es vorgesehen sein, dass die Bodenplatte bzw. eine Trittplatte, von der Sitzkonsole anhebbar bzw. entfernbar ist.

Bevorzugt kann es die vorliegende Erfindung außerdem vorsehen, dass die Sitzkonsole an einem in Bewegungsrichtung gesehen vorderen Teil der Straßenbaumaschine mindestens ein Trittbereich aufweist, der über ein erstes Führungselement einer Lineargleitführung mit dem Chassis beweglich verbunden ist, wobei das Chassis ein entsprechendes zweites Führungselement aufweist. Diese Lineargleitführung weist insbesondere zwei aus einem Verbundmaterial hergestellte Gleitflächen auf. Darüber hinaus dient die Lineargleitführung als Stabilisierung bzw. zweiter Aufstützpunkt der Sitzkonsole. Durch Lösen eines optionalen Sicherungshebels, der insbesondere händisch bedienbar ist, kann die Sitzkonsole entlang der Stange bzw. der Linearkugellager sowie der Lineargleitführungen quer zur Bewegungsrichtung bewegt werden. Diese Bewegung ist per Hand durchzuführen oder alternativ automatisiert durch einen Antrieb. Sowohl die Lineargleitführung als auch die Linearkugellager in Kombination mit der Stange können als eine Art Loslager betrachtet bzw. verwendet werden.

Weiter kann es die vorliegende Erfindung vorsehen, dass das zweite Führungselement mindestens die gleiche Länge aufweist wie das erste Führungselement, insbesondere das zweite Führungselement länger als das erste Führungselement ist, wobei zumindest ein Teil des mit dem Chassis verbundenen zweiten Führungselements über das Chassis hinausragt. Über diese relative Verlängerung des zweiten Führungselementes gegenüber dem ersten Führungselement kann die Gleitführung der Sitzkonsole über das Chassis hinaus vergrößert werden und somit der maximale Weg des Verschiebens der Sitzkonsole erhöht werden.

Insbesondere kann es die vorliegende Erfindung weiter vorsehen, dass die Sitzkonsole ein Geländer aufweist, welches zusammen mit der Sitzkonsole verschiebbar ist und welches den Führerstand in jeder Position der Sitzkonsole zumindest Teilweise umfasst bzw. sichert. Durch dieses Geländer ist ein gewisser Schutz herstellbar, der verhindert, dass die Bedienperson durch eine Unachtsamkeit in den Arbeitsbereich der Straßenbaumaschine fallen kann.

Eine weitere Lösung des eingangs genannten Problems wird durch den Anspruch 10 beschrieben. Demnach wird eine Sitzkonsole für eine Straßenbaumaschine, insbesondere einen Straßenfertiger oder einen Beschicker, gemäß den Ansprüchen 1 bis 9 beansprucht.

Ein bevorzugtes Ausführungsbeispiel der vorliegenden Erfindung soll im Folgenden anhand der Zeichnung näher erläutert werden. In dieser zeigen:
- Fig. 1: schematische Seitenansicht eines Straßenfertigers,
- Fig. 2: Sicht auf einen Führerstand,
- Fig. 3: Sicht auf einen Bedienersitz,
- Fig. 4: perspektivische Teildarstellung einer Sitzkonsole,
- Fig. 5: perspektivische Ansicht einer Unterseite der Sitzkonsole,
- Fig. 6: perspektivische Ansicht eines vorderen Teils der Sitzkonsole,
- Fig. 7: perspektivische Ansicht einer Lineargleitführung, und
- Fig. 8: eine Schnittdarstellung durch die Sitzkonsole.

Die vorliegende Erfindung wird im Folgenden exemplarisch an einem Straßenfertiger 10 dargestellt. Es sei jedoch darauf hingewiesen, dass die Erfindung auf jede Straßenbaumaschine, somit auch auf beispielsweise Beschicker oder Fräsen oder dergleichen, Anwendung findet.

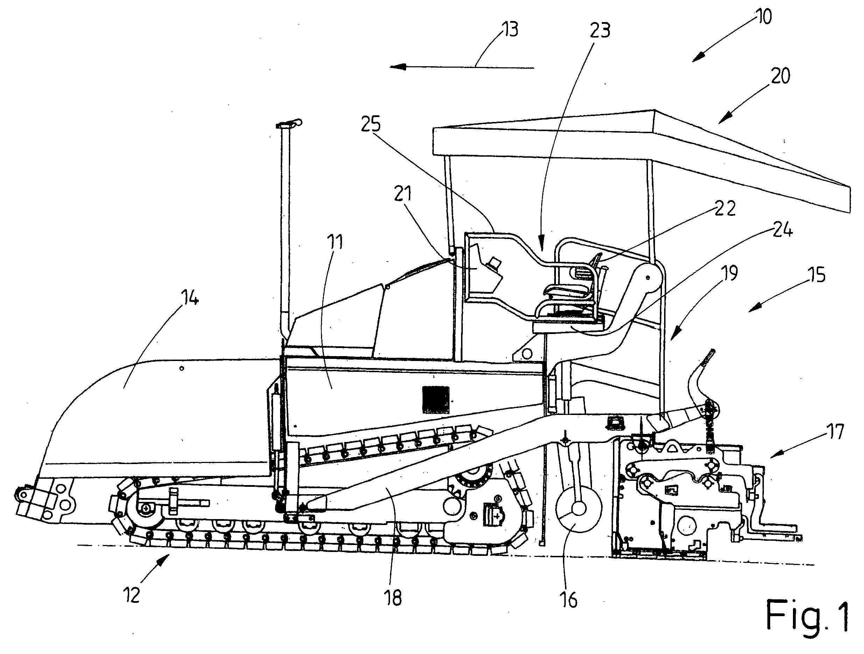

Der in der Fig. 1 dargestellte Straßenfertiger 10 dient zur Herstellung von Straßenbelägen. Bevorzugt dient der Straßenfertiger 10 zur Herstellung von sogenannten Schwarzdecken, nämlich Straßenbelägen aus Asphalt. Der Straßenfertiger 10 kann aber auch zur Herstellung von Straßenbelägen aus anderen Materialien, zum Beispiel Beton, eingesetzt werden.

Der Straßenfertiger 10 ist selbstfahrend ausgebildet. Dazu verfügt dieser über eine zentrale Antriebseinheit 11, die beispielsweise einen Verbrennungsmotor aufweist, der Hydraulikpumpen zur Versorgung von Hydraulikmotoren und gegebenenfalls einen Generator zur Erzeugung von Energie für elektrische Antriebe oder eine Heizung aufweist.

Der Straßenfertiger 10 verfügt im Übrigen über ein Fahrwerk 12, dass im gezeigten Ausführungsbeispiel als ein Raupenfahrwerk ausgebildet ist. Der Straßenfertiger 10 kann aber auch mit einem Radfahrwerk ausgestattet sein. Das Fahrwerk 12 wird von der Antriebseinheit 11 derart angetrieben, dass sich der Straßenfertiger 10 zur Herstellung des Straßenbelags in Bewegungsrichtung 13 fortbewegt.

In Bewegungsrichtung 13 gesehen ist vor dem Fahrwerk 12 ein wannen- bzw. muldenartig ausgebildeter Vorratsbehälter 14 angeordnet. Der Vorratsbehälter 14 nimmt einen Vorrat des zur Herstellung des Straßenbelags dienenden Materials, im gezeigten Ausführungsbeispiel heißen Asphalt, auf. Durch ein beispielsweise als Kratzerförderer ausgebildetes Förderorgan wird das noch heiße Straßenbaumaterial vom Vorratsbehälter 14 entgegen der Bewegungsrichtung 13 zum hinteren Ende 15 des Straßenfertigers 10 transportiert. Das hintere Ende 15 des Straßenfertigers 10 befindet sich in Bewegungsrichtung 13 gesehen hinter dem Fahrwerk 12 und der Antriebseinheit 11.

Am hinteren Ende 15 des Straßenfertigers 10 sind eine Verteilerschnecke 16 und mit Abstand dahinter eine Einbaubohle 17 angeordnet. Die Verteilerschnecke 16 und die Einbaubohle 17 sind auf- und abbewegbar. Zu diesem Zweck sind die Einbaubohle 17 und die Verteilerschnecke 16 an Tragarmen 18 angehängt. Die Tragarme 18 sind schwenkbar am Fahrwerk 12 des Straßenfertigers 10 gelagert. Hydraulikzylinder oder dergleichen verschwenken die Tragarme 18, um die Einbaubohle 17 und vorzugsweise auch die Verteilerschnecke 16 anzuheben bzw. abzusenken.

Zwischen dem hinteren Ende 15 und dem Vorratsbehälter 14 ist dem Fahrgestell bzw. dem Chassis 19 des hier dargestellten Straßenfertigers 10 ein Führerstand 20 zugeordnet. Auf diesem Führerstand befindet sich während der Herstellung des Straßenbelags mindestens eine Bedienperson zur Steuerung des Straßenfertigers 10. Dazu ist dem Führerstand 20 mindestens ein Bedienpult 21 zugeordnet sowie mindestens ein Bedienersitz 22. Bei dem hier dargestellten Ausführungsbeispiel eines Straßenfertigers 10 ist es vorgesehen, dass der Führerstand 20 zwei jeweils einen Bedienpult 21 und einen Bedienersitz 22 aufweisende Bedienerstationen 23 aufweist.

Die Bedienersitze 22 sind jeweils durch eine Sitzkonsole 24 mit der jeweiligen Bedienerstation 23 bzw. mit dem Chassis 19 des Straßenfertigers 10 verbunden. Der Bedienerstation 23 ist darüberhinaus zu Sicherungszwecken ein Geländer 25 zugeordnet. Dieses Geländer 25 ist derart angeordnet, dass die Bedienperson während des Betriebes nicht von dem Führerstand 20 herunterfallen kann.

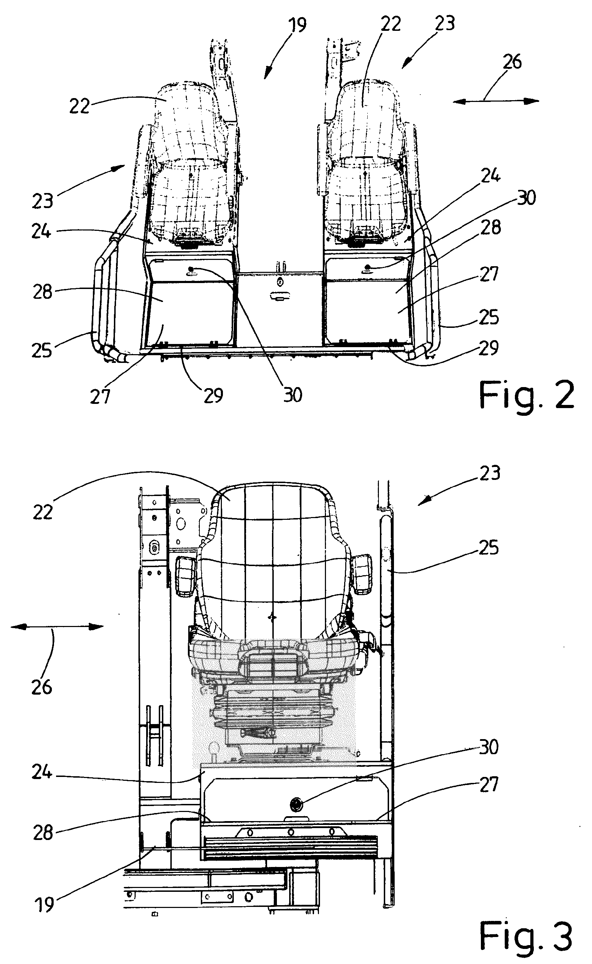

Die Bedienerstationen 23 sind jeweils in eine Verschieberichtung 26 quer zur Bewegungsrichtung 13 auf dem Führerstand 20 und relativ zu dem Chassis 19 hin und her bewegbar (Fig. 2). In der über die Abmessungen des Chassis 19 hinaus geschobenen Position erlangt die Bedienperson eine bessere Sicht auf den herzustellenden Straßenbelag. Dieses Hin- und Herschieben der Bedienerstationen 23 erfolgt händisch oder durch einen Antrieb. Um die Bedienerstation 23 bzw. den Bedienersitz 22 in einer gewünschten Position zu halten, kann die Sitzkonsole 24, auf der der Bedienersitz 22 angeordnet ist, durch beispielsweise einen Hebel arretiert werden.

Den Bedienerstationen 23 bzw. der Sitzkonsole 24 weist an einem in Bewegungsrichtung 13 gesehenen vorderen Teil 35 ein Trittbereich 27 auf. Dieser Trittbereich 27 dient vorzugsweise als Standfläche für die Bedienperson. Der Trittbereich 27 weist eine Bodenplatte 28 auf, die für beispielsweise Wartungszwecke der Sitzkonsole 24 um eine Achse 29 hochschwenkbar ist und somit den Raum unter der Sitzkonsole 24 freigibt. Um die Bodenplatte 28 in Ihrer Position zu fixieren bzw. zu sichern, weist sie ein Schloss 30 auf, durch das ein ungewolltes Öffnen der Bodenplatte 28 unterbunden werden kann (Fig. 3).

Die in der Fig. 3 dargestellte Bedienerstation 23 befindet sich gegenüber dem Chassis 19 in einer quer zur Bewegungsrichtung 13 in Verschieberichtung 26 nach außen verschobenen Position. In diesem verschobenen Zustand hat die Bedienperson eine bessere Sicht und somit eine bessere Kontrolle auf den Herstellungsprozess des Straßenbelags.

In der Fig. 3 ist ebenfalls zu erkennen, dass der Verschiebemechanismus bzw. sämtliche Lager und dergleichen unter der Sitzkonsole 24, insbesondere durch die Bodenplatte 28, abgedeckt ist. Das hat den besonderen Vorteil, dass die Bedienperson, welche sich auf der Bedienerstation 23 befindet, nicht über offenliegende mechanische Bauteile, wie Lager oder Schafte, stolpern bzw. sich verletzen kann. Andererseits ist die mechanische Verschiebeeinheit auch geschützt vor Verunreinigungen durch Schmutz oder auch durch Beschädigung durch andere Gegenstände, wie beispielsweise Werkzeug.

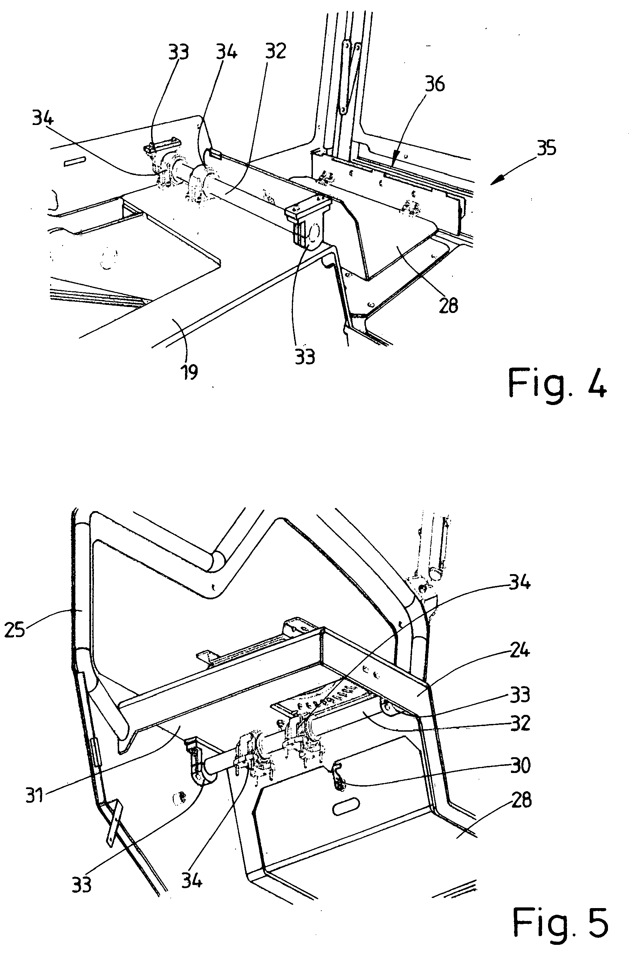

Zum Verschieben des Bedienersitzes 22 ist einer Unterseite 31 der Sitzkonsole 24 eine Stange 32 zugeordnet. Diese Stange 32 ist mit ihren Enden durch zwei Befestigungsmittel 33 an der Unterseite 31 der Sitzkonsole 24 befestigt. Die Stange 32 bewegt sich durch bzw. auf zwei Lager bzw. Linearkugellagern 34. Diese Linearkugellager 34 sind an dem Chassis 19 fest angebaut. In Fig. 4 ist die Stange 32 mit dem Befestigungsmittel 33 sowie dem Linearkugellager 34 dargestellt, und zwar für eine bessere Darstellung ohne die Sitzkonsole 24.

In der Fig. 4 ist ebenfalls dargestellt, dass die Bodenplatte 28 an einem vorderen Teil 35 der Sitzkonsole 24 schwenkbar angelengt ist. Dieses vordere Teil 35 der Sitzkonsole 34 ist über eine Lineargleitführung 36 mit dem Chassis 19 gleitend verbunden. Somit ist die Sitzkonsole 24 über die Stange 32 bzw. die Linearkugellager 34 und die Lineargleitführung 36 mit dem Chassis 19 beweglich verbunden. Es ist jedoch auch denkbar, dass die Stange 32 durch andere Lager gleitend mit dem Chassis 19 verbunden ist.

Die Fig. 5 stellt eine perspektivische Ansicht unter die Sitzkonsole 24 dar, und zwar ohne Darstellung des Chassis 19 und des Bedienersitzes 22. Durch diese Darstellung wird verdeutlicht, wie die Stange 32 mit dem Befestigungsmitteln 33 an der Unterseite 31 der Sitzkonsole 24 befestigt ist. Erfindungsgemäß ist es vorgesehen, dass der Abstand der Linearkugellager 34 nur ein Bruchteil der Länge der Stange 32 beträgt. Bei dem in Fig. 5 dargestellten Ausführungsbeispiel beträgt der Abstand zwischen den Linearkugellagern 34 sogar weniger als die Hälfte der Länge der Stange 32.

Darüber hinaus ist durch die Fig. 5 ersichtlich, dass sowohl die Stange 32 als auch die Linearkugellager 34 durch die Sitzkonsole 24 abgedeckt sind, so dass sie von der Bedienerstation 23 nicht zugänglich sind. Lediglich durch Hochschwenken der Bodenplatte 28 bzw. durch Öffnen des Schlosses 30 ist die Stange 32 sowie die Befestigungsmittel 33 für beispielsweise Wartungszwecke zugänglich.

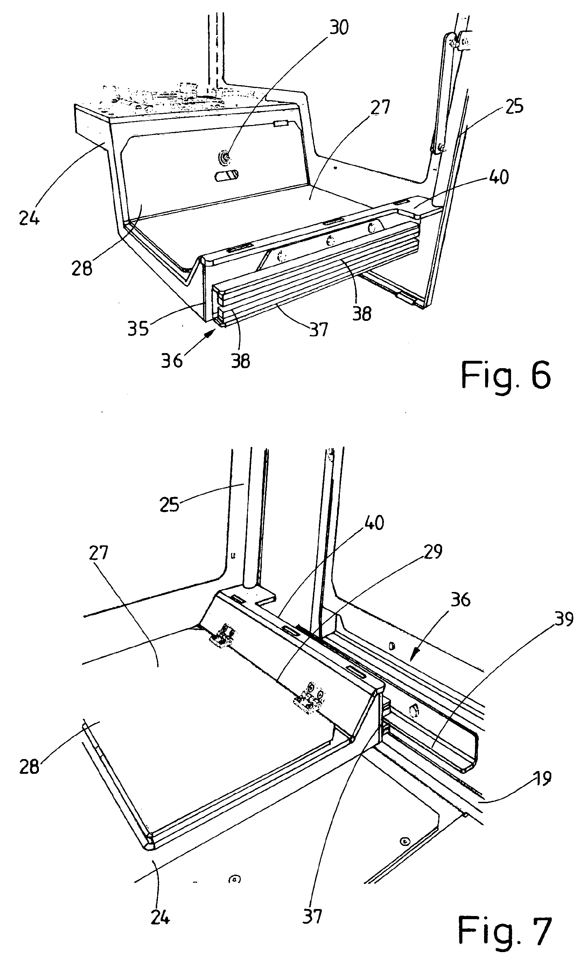

In Fig. 6 ist eine perspektivische Sicht auf die Sitzkonsole 24, und zwar ohne Bedienersitz 22 und ohne Chassis 19 dargestellt. Dem vorderen Teil 35 der Sitzkonsole 24 ist ein erstes Führungselement 37 der Lineargleitführung 36 zugeordnet. Dieses erste Führungselement 37 weist zwei beabstandete Gleitflächen 38 auf, die vorzugsweise aus einem Verbundmaterial hergestellt werden. Dieses erste Führungselement 37 bzw. die beiden Gleitflächen 38 dienen der Aufnahme eines schienenartigen zweiten Führungselementes 39 (Fig. 7). Beim Verschieben der Sitzkonsole 24 relativ zu dem Chassis 19 gleitet das erste Führungselement 37 über das zweite Führungselement 39. Damit der Bewegungsspielraum der Sitzkonsole 24 größer ist, kann das zweite Führungselement 39 zumindest geringfügig länger als das erste Führungselement 37 ausgebildet sein und leicht über das Chassis 19 hinausragen.

Damit die Bedienperson nicht unbeabsichtigt in die Lineargleitführung 36 hineinlangt bzw. um eine Verschmutzung der Lineargleitführung 36 zu vermeiden, ist über dem ersten Führungselement 37 eine Abdeckung 40 angeordnet. Bei dem in den Fig. 6 und 7 dargestellten Ausführungsbeispielen der Sitzkonsole 24 ist ersichtlich, dass das Geländer 25 fest mit der Sitzkonsole verbunden ist, so dass beim Verschieben dergleichen auch das Geländer 25 mit verschoben wird und die Sicherheit der Bedienperson zu jedem Zeitpunkt gewährleistet ist.

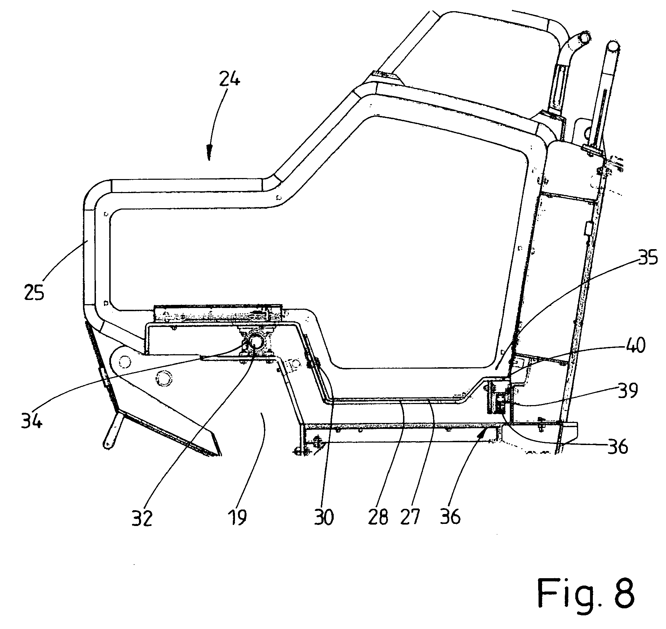

Die Stange 32 sowie die Lineargleitführung 36 bzw. das erste Führungselement 37 und das zweite Führungselement 39 sind parallel zueinander ausgerichtet, so dass die Sitzkonsole 24 mit geringem Kraftaufwand leicht hin- und her verschiebbar ist (Fig. 8). In Fig. 8 ist die Sitzkonsole 24 dargestellt, und zwar ohne den Bedienersitz 22 befestigt auf dem Chassis 19. Somit wird durch die hier vorliegende Erfindung eine Straßenbaumaschine bzw. eine Sitzkonsole 24 geschaffen, die sicher und zuverlässig bedienbar ist.

**Bezugszeichenliste:**

| | | | |
|---|---|---|---|
| 10 | Straßenfertiger | 36 | Lineargleitführung |
| 11 | Antriebseinheit | 37 | erstes Führungselement |
| 12 | Fahrwerk | 38 | Gleitflächen |
| 13 | Bewegungsrichtung | 39 | zweites Führungselement |
| 14 | Vorratsbehälter | 40 | Abdeckung |
| 15 | hinteres Ende | | |
| 16 | Verteilerschnecke | | |
| 17 | Einbaubohle | | |
| 18 | Tragarm | | |
| 19 | Chassis | | |
| 20 | Führerstand | | |
| 21 | Bedienpult | | |
| 22 | Bedienersitz | | |
| 23 | Bedienerstation | | |
| 24 | Sitzkonsole | | |
| 25 | Geländer | | |
| 26 | Verschieberichtung | | |
| 27 | Trittbereich | | |
| 28 | Bodenplatte | | |
| 29 | Achse | | |
| 30 | Schloss | | |
| 31 | Unterseite | | |
| 32 | Stange | | |
| 33 | Befestigungsmittel | | |
| 34 | Linearkugellager | | |
| 35 | vorderes Teil | | |

## Patentansprüche

1. Straßenbaumaschine, insbesondere Straßenfertiger (10) oder Beschicker, mit einem Chassis (19) dem ein Führerstand (21) mit mindestens einer einen Bedienersitz (22) aufweisenden Sitzkonsole (24) zugeordnet ist, wobei die mindestens eine Sitzkonsole (24) mit dem Bedienersitz (22) quer zu einer Bewegungsrichtung (13) der Straßenbaumaschine bewegbar ist, **dadurch gekennzeichnet, dass** die mindestens eine Sitzkonsole (24) an einer Unterseite (31) eine Stange (32) aufweist, die in mindestens einem am Chassis (19) befestigten Lager (34) quer zur Bewegungsrichtung (13) linear verschiebbar ist.

2. Straßenbaumaschine nach Anspruch 1, **dadurch gekennzeichnet, dass** die Stange (32) von der Sitzkonsole (24) verdeckt unter selbiger fest angeordnet ist, insbesondere dass die Stange (32) an einem in Bewegungsrichtung (13) gesehen hinterem Teil der Sitzkonsole (24), vorzugsweise unter dem Bedienersitz (22), befestigt ist.

3. Straßenbaumaschine nach Anspruch 1 oder 2, **dadurch gekennzeichnet, dass** das mindestens eine Lager (34) als Linearlager, insbesondere Linearkugellager oder Kugelbuchse ausgebildet ist.

4. Straßenbaumaschine nach einem der vorhergehenden Ansprüche, **dadurch gekennzeichnet, dass** die Stange (32) mit ihren beiden Enden durch zwei Befestigungsmittel (33) an der Unterseite (31) der Sitzkonsole (24) befestigt ist.

5. Straßenbaumaschine nach einem der vorhergehenden Ansprüche, **dadurch gekennzeichnet, dass** die Stange (32) in zwei Linearkugellagern (34), die beide am Chassis (19) befestigt sind, beweglich gelagert ist, wobei der Abstand der beiden Linearkugellager (34) ein Bruchteil der Länge der Stange (32) entspricht, insbesondere gleich bzw. kleiner als die Hälfte der Länge der Stange (32) ist.

6. Straßenbaumaschine nach einem der vorhergehenden Ansprüche, **dadurch gekennzeichnet, dass** die Stange (32) und das mindestens eine Lager (34) der Sitzkonsole (24) durch eine schließbare, vorzugsweise abschließbare, an der Sitzkonsole (24) angebauten Bodenplatte (28) zugänglich sind.

7. Straßenbaumaschine nach einem der vorhergehenden Ansprüche, **dadurch gekennzeichnet, dass** die Sitzkonsole (24) an einem in Bewegungsrichtung (13) gesehen vorderem Teil (35) der Straßenbaumaschine mindestens ein Trittbereich (27) aufweist, der über ein erstes Führungselement (37) einer Lineargleitführung (36) mit dem Chassis (19) beweglich verbunden ist, wobei das Chassis (19) ein entsprechendes zweites Führungselement (39) aufweist.

8. Straßenbaumaschine nach einem der vorhergehenden Ansprüche, **dadurch gekennzeichnet, dass** das zweite Führungselement (39) mindestens die gleiche Länge aufweist wie das erste Führungselement (37), insbesondere das zweite Führungselement (39) länger als das erste Führungselement (37) ist, wobei zumindest ein Teil des mit dem Chassis (19) verbundene zweite Führungselement (39) über das Chassis (19) hinausragt.

9. Straßenbaumaschine nach einem der vorhergehenden Ansprüche, **dadurch gekennzeichnet, dass** die Sitzkonsole (24) ein Geländer (25) aufweist, welches zusammen mit der Sitzkonsole (24) verschiebbar ist und welches den Führerstand (20) in jeder Position der Sitzkonsole (24) zumindest teilweise umfasst.

10. Sitzkonsole (24) für eine Straßenbaumaschine, insbesondere Straßenfertiger (10) oder Beschicker, nach einem der Ansprüche 1 bis 9.
